# NEUE EUROPÄISCHE PATENTSCHRIFT

(11) **EP 1 707 296 B2**
(45) Veröffentlichungstag und Bekanntmachung des Hinweises auf die Entscheidung über den Einspruch: **24.07.2013**
(45) Hinweis auf die Patenterteilung: 13.08.2008
(21) Anmeldenummer: 06006031.6
(22) Anmeldetag: 23.03.2006
(51) Int. Cl.: B23K 9/173, B23K 35/38

(54) **Verfahren zum Lichtbogenschweissen**
Arc welding method
Procédé de soudage à l'arc

(30) Priorität: 01.04.2005 DE 102005014969
(43) Veröffentlichungstag der Anmeldung: 04.10.2006
(73) Patentinhaber: Linde AG, 80331 München (DE)
(72) Erfinder: Matz, Christoph, 85716 Unterschleissheim (DE); Miklos, Ernst, 85551 Kirchheim (DE); Sapia, Wolfgang, 85716 Unterschleissheim (DE)

(56) Entgegenhaltungen:
- EP-A- 1 077 102
- WO-A-97/45227
- WO-A1-01//62424
- GB-A- 1 517 097
- GB-A- 2 124 531
- US-A- 5 155 330
- US-A1- 2002 190 033
- PATENT ABSTRACTS OF JAPAN Bd. 012, Nr. 416 (M-759), 4. November 1988 (1988-11-04) & JP 63 154266 A (NIPPON KOKAN KK <NKK>), 27. Juni 1988 (1988-06-27)
- PATENT ABSTRACTS OF JAPAN Bd. 014, Nr. 291 (M-0989), 22. Juni 1990 (1990-06-22) & JP 02 092464 A (NIPPON STEEL CORP), 3. April 1990 (1990-04-03)
- PATENT ABSTRACTS OF JAPAN Bd. 018, Nr. 611 (M-1708), 21. November 1994 (1994-11-21) & JP 06 234075 A (KOBE STEEL LTD), 23. August 1994 (1994-08-23)
- SVEN GÖCKE: 'Tandem MIG/MAG Welding' 2001, XP055058226

## Beschreibung

Die Erfindung betrifft ein Verfahren zum Schweißen mit mindestens zwei abschmelzenden Elektroden, an welchen mindestens zwei unterschiedliche Potentiale angelegt werden, wobei ein gemeinsames Schweißbad von einer vorlaufenden Elektrode und von mindestens einer nachlaufenden Elektrode gebildet wird, und wobei für die vorlaufende Elektrode ein im Vergleich zu der nachlaufenden Elektrode größerer Elektrodendurchmesser verwendet wird.

Zum Lichtbogenschweißen unter Schutzgas werden verschiedene Schweißverfahren eingesetzt. Neben dem Verfahren mit abschmelzender Elektrode, zu welcher das Metall-Aktiv-Gas- und das Metall-Inert-Gas-Schweißen zählen, gibt es das mit nicht abschmelzender Elektrode arbeitende Wolfram-Inert-Gas-Schweißen, das Plasmaschweißen und das Unterpulverschweißen. Zu Steigerung der Produktivität werden in den letzten Jahren zunehmend Hochleistungsschweißverfahren eingesetzt. Hochleistungsschweißverfahren, welche in der Regel mit abschmelzenden Elektroden arbeiten, zeichnen sich im Vergleich zum konventionellen Metall-Schutzgas-Schweißen durch höhere Abschmelzleistungen der Elektrode aus. Als Elektroden werden dazu entweder Drähte mit sehr großen Drahtdurchmessern verwendet oder die Drahtvorschubgeschwindigkeit ist höher als beim konventionellen Metall-Schutzgas-Schweißen. Die höheren Abschmelzleistungen lassen sich in höhere Schweißgeschwindigkeiten oder in höhere Schweißnahtvolumina umsetzen - im Vergleich zum konventionellen Schweißen. Grundlagen des Metall-Schutzgas-Hochleistungsschweißens sind im Merkblatt des deutschen Verbandes für Schweißen und verwandte Verfahren e.V., DSV 0909-1 (September 2000) und DSV 0909-2 (Juni 2003) näher beschrieben.

Neben den auch beim konventionellen Schweißen üblichen Schweißverfahren mit einer abschmelzenden Elektrode gibt es beim Hochleistungsschweißen auch Verfahren, bei welchen zwei oder mehrere Elektroden abgeschmolzen werden, die so genannten Mehrdrahtprozesse. Verwendet werden in der Regel zwei abschmelzende Elektroden, jedoch sind auch drei oder mehr Elektroden möglich. Die Elektroden schmelzen in getrennten Lichtbögen unter einer gemeinsamen Schutzgasabdeckung ab und bilden zusammen mit dem geschmolzenen Werkstück-Material ein gemeinsames Schmelzbad. Die Elektroden sind dabei, in Schweißrichtung gesehen, hintereinander angeordnet, so dass auf eine vorlaufende Elektrode eine oder mehrere nachlaufende Elektroden folgen. Werden zwei Elektroden verwendet und werden diese beiden Elektroden an ein gemeinsames Potential gelegt, spricht man vom Doppeldrahtschweißen. Werden die beiden Elektroden hingegen an unterschiedliche Potentiale gelegt, spricht man von Tandemschweißen. Zur Realisierung des Tandemschweißens werden deshalb zwei Kontaktrohre, zwei Stromquellen und zwei Steuerungen benötigt, wobei die Stromquellen dabei jedoch auch gekoppelt sein und im Master-Slave-Betrieb betrieben werden können.

Neben den beschriebenen Verfahren des Hochleistungsschweißens mit zwei oder mehr Drähten, bei welchen das Material der abgeschmolzenen Elektroden in ein gemeinsames Schmelz- oder Schweißbad übergehen, gibt es zum Einbringen von großen Mengen Zusatzmaterial zur Füllung von großen Schweißvolumina noch ein weitere Methode: das Schweißen in zwei oder mehreren Lagen. Dabei wird das Zusatzmaterial Lage für Lage eingebracht, beginnend mit der untersten Lage. Die unterste Lage erstarrt, bevor die nächste Lage geschweißt wird, so dass ein Vermischen der Lagen nicht stattfindet. Ein Schweißen in mehreren Lagen findet normalerweise nacheinander statt. Möglich ist es aber auch, zwei oder mehr Elektroden gemeinsam über das Werkstück zu führen, wobei die Elektroden so weit voneinander entfernt angebracht sind, dass die Schweißfüllung, welche von der vorlaufenden Elektrode erzeugt wurde, bereits soweit erstarrt ist, das eine eigene Schweißlage vorliegt, bevor mit der nachfolgenden Elektrode weiteres, geschmolzenes Zusatzmaterial in die Schweißnaht eingebracht wird. Schweißverfahren für große Schweißvolumina in Lagen, welche nicht in zwei Arbeitsschritten sondern mit zwei aufeinanderfolgenden Elektroden erzeugt werden, sind beispielsweise in der JP 6234075, in der JP 63154266 oder in der JP2092464 offenbart. Neben der Größe des Abstands der beiden Elektroden sorgt auch die Verwendung eines schlackebildenden Fülldrahts für die Lagenbildung.

Generell gilt für alle Methoden des Schutzgasschweißens, dass diese im Vergleich zu anderen Schweißverfahren und insbesondere im Vergleich zum Unterpulverschweißen, einen relativ geringen Einbrand aufweisen. Dies gilt auch für die Mehrdrahtprozesse. Die Festigkeit einer Schweißverbindung hängt jedoch wesentlich von der Tiefe und Güte des Einbrands ab. Insbesondere wenn eine weite Spaltüberbrückung notwendig ist und große Volumina mit Schweißgut gefüllt werden müssen, ist eine ausreichende und gleichmäßige Füllung sowie ein hinreichend tiefer Einbrand, der für eine gute Verklammerung Voraussetzung ist, oft nicht zu erreichen. Eine gewisse Beeinflussung des Einbrands ist beim Metall-Schutzgas-Schweißen durch die Wahl der Schutzgaszusammensetzung und der Schweißgeschwindigkeit erreicht. Bei der Schutzgaswahl müssen neben dem Einbrand nämlich noch weitere Faktoren, wie beispielsweise Lichtbogenstabilität, Spritzerauswurf oder Porenbildung berücksichtigt werden, so dass der Einbrand über die Schutzgaswahl nur beschränkt beeinflusst werden kann. Eine Verbesserung des Einbrands, welche durch eine Verringerung der Schweißgeschwindigkeit erreicht wird, ist jedoch meist unerwünscht, da ein Herabsetzen der Schweißgeschwindigkeit eine niedrigere Produktivität zur Folge hat. Bei einer Verwendung von zwei oder mehreren Drähten hängt die Festigkeit und die Belastbarkeit der Schweißverbindung entscheidend davon ab, ob ein gemeinsames Schweißbad ausgebildet wird oder nicht. Liegt während des Schweißens kein gemeinsames Schweißbad vor, handelt es sich gleichsam um ein Schweißen in mehreren Lagen, wenngleich die Lagen sehr schnell nacheinander aufgetragen werden. Jedem Schweißdraht ist dabei eine Lage zuzuordnen, da die den einzelnen Drähten zugeordneten Schweißbäder voneinander getrennt erstarren und eine Durchmischung des Zusatzmaterials somit nicht stattfindet. Diese Lagen sind miteinander verklammert, eine Aufgliederung der Gesamtnaht in die Lagen besteht jedoch. Diese Lagenaufspaltung ist auch in Schliffbildern deutlich zu erkennen. Die Lagenausbildung führt zu Gesamtnähten, die häufig von deutlich geringerer Qualität hinsichtlich Festigkeit und Belastbarkeit sind, als Schweißnähte, die keine Lagenaufspaltung zeigen und nur auf ein Schweißbad zurückzuführen sind.

Der Erfindung liegt deshalb die Aufgabe zugrunde, ein Verfahren anzugeben, das zu einem hinreichend tiefen Einbrand auch bei hohen Schweißgeschwindigkeiten führt, große Schweißvolumina bei hohen Schweißgeschwindigkeiten zufriedenstellend füllt und gleichzeitig auch zufriedenstellende Nahtoberflächen erzeugt und weiterhin eine hohe Festigkeit und Belastbarkeit und damit eine hohe Qualität der Schweißverbindung gewährleistet.

Die Aufgabe wird erfindungsgemäß durch ein Verfahren nach Anspruch 1 gelöst. Durch die Tatsache, dass bei dem erfindungsgemäßen Verfahren ein gemeinsames Schweißbad entsteht, ist es gewährleistet, dass die Schweißverbindung höchsten Ansprüchen hinsichtlich Festigkeit und Belastbarkeit genügt. Anderseits ist es aufgrund der unterschiedlichen Elektrodendurchmessern möglich, den Elektroden verschiedene Aufgaben zu zuordnen, wodurch die Anforderungen an Einbrand, Füllen von großen Schweißvolumina und zufriedenstellende Nahtoberflächen in einem einzigen Schweißvorgang erfüllt werden können. Überraschenderweise hat es sich nämlich gezeigt, dass bei dem erfindungsgemäßen Verfahren zwar ein gemeinsames Schweißbad vorliegt, eine Aufgabenzuweisung der Elektroden aber trotz des gemeinsamen Schweißbads möglich ist. Die Vermischung des abgeschmolzenen Elektrodenmaterials geht einerseits soweit, dass ein gemeinsames Schweißbad entsteht, anderseits bleibt das zuerst eingebrachte Material am Grund der Schweißnaht während das zuletzt zugefügt Zuatzmaterial an der Oberseite der Schweißnaht zu finden ist. Folglich ist eine Aufgabenzuweisung für vorlaufende und nachlaufende Elektrode trotz der Ausbildung eines gemeinsamen Schweißbads möglich. So ist bei dem erfindungsgemäßen Verfahren die vorlaufende Elektrode für den Einbrand und das Füllen der Schweißvolumina zuständig. Da der Durchmesser der vorlaufenden Elektrode bei dem erfindungsgemäßen Verfahren relativ groß gewählt werden kann, kann für die vorlaufende Elektrode ein sehr hoher Schweißstrom gewählt werden. Ein hoher Schweißstrom wiederum sorgt für einen tiefen Einbrand, so dass eine stoffschlüssige Verbindung entsteht, die auch sehr hohen qualitativen Anforderungen, insbesondere in Bezug auf die Festigkeit hin, genügt. Ferner ist es möglich, da ja der Durchmesser der vorlaufenden Elektrode größer als der der nachlaufenden Elektrode(n) ist, eine sehr hohe Abschmelzleistung für die vorlaufenden Elektrode einzustellen, so dass sehr große Schweißvolumina gleichmäßig und porenfrei mit Schweißgut gefüllt werden können. Zur Ausbildung der Nahtoberfläche hingegen wird eine nachlaufende, und insbesondere die letzte Elektrode verwendet. Bei einer Verwendung von zwei Elektroden wird somit durch die vorlaufende Elektrode der Einbrand bestimmt und mit der nachlaufenden Elektrode wird die Nahtoberfläche ausgebildet. Werden drei oder mehr Elektroden verwendet, werden die Elektrode(n), aus welchen die mittleren Lagen gebildet werden, größtenteils zur Verbesserung des Einbrands aber teilweise auch zur Ausbildung der Nahtoberfläche beitragen. Der Durchmesser und die Abschmelzleistung der mittleren Elektrode(n) ist deshalb auf diese beide Aspekte hin zu wählen. Folglich wird es mit dem erfindungsgemäßen Verfahren möglich, für die nachfolgende(n) Elektrode(n) im Vergleich zur vorlaufenden Elektrode kleinere Durchmesser zu wählen, die auf die jeweilige Aufgabe hin optimiert sind. Insbesondere für die letzte Elektrode, mit welcher die Nahtoberfläche gebildet wird, wird ein Durchmesser gewählt, der für optimale Eigenschaften der Nahtoberfläche sorgt und bei welchem eine Überhitzung der Nahtoberfläche vermieden werden kann. Die Parameter für die nachlaufende Elektrode können nun, da die Elektrode einen kleineren Durchmesser aufweist, so eingestellt werden, dass eine Überhitzung der Nahtoberfläche vermieden wird. Eine starke Oxidation der Nahtoberfläche sowie eine hohe Oberflächenrauhigkeit kann somit unterbunden werden. Mit dem erfindungsgemäßen Verfahren ist es somit möglich, die Parameter für vor- und nachlaufenden Elektroden so stark voneinander abweichend einzustellen, dass die konträren Anforderungen bezüglich Einbrand und Nahtoberfläche in einem Arbeitsschritt auch bei hohen Schweißgeschwindigkeiten erfüllt werden können. Dadurch werden die Anwendungsmöglichkeiten für Hochleistungsschweißen mit Mehrdrahtprozessen, und insbesondere die Anwendungsmöglichkeiten für Tandemschweißprozesse bedeutend erweitert.

In vorteilhafter Ausgestaltung der Erfindung werden für vor- und nachlaufende Elektrode(n) verschiedene Drahtvorschubgeschwindigkeiten verwendet. Die Drahtvorschubgeschwindigkeit hat großen Einfluss auf die Abschmelzleistung, so dass durch die Wahl der Drahtvorschubgeschwindigkeit die Vorteile der Erfindung wirkungsvoll unterstützt werden können.

Mit Vorteil werden zwei Elektroden mit einen Abstand zueinander von 4 bis 7 mm, bevorzugt von 5 bis 7 mm verwendet, wobei der Abstand der Elektroden vor dem Schweißprozess nach Einstellung der Lage der Schutzgasdüse durch Herausfahren der Elektroden bis auf das Werkstück an den das Werkstück berührenden Elektrodenenden gemessen wird. Die genannten Einstellungen werden empfohlen, damit ein gemeinsames Schmelzbad entsteht. Wird für den Abstand der Elektrodenenden hingegen ein zu großer Wert (in der Regel wird dies ein Wert sein, der oberhalb der angegebenen Werte liegt) gewählt, liegen getrennte Schweißbäder vor und es handelt sich folglich um ein Schweißen in zwei Lagen. In dieser vorteilhaften Ausgestaltung der Erfindung ist somit ein gemeinsames Schweißbad gewährleistet und weiterhin kann die vorlaufende Elektrode die Anforderungen hinsichtlich des Einbrands und der Schweißvolumina und die nachlaufende Elektrode hinsichtlich der Nahtoberfläche erfüllen.

In vorteilhafter Ausgestaltung der Erfindung weist die vorlaufende Elektrode einen Durchmesser auf, der zwischen 1,0 und 2,0 mm, vorzugsweise zwischen 1,2 und 1,6 mm liegt. Mit Elektrodendurchmessern dieser Größe lässt sich ein tiefer Einbrand und eine Füllung von großen Schweißvolumina auch bei hohen Schweißgeschwindigkeiten erreichen. Besonders geeignet sind für das erfindungsgemäße Verfahren Drahtelektroden, insbesondere Massivdrahtelektroden.

Weiterhin weist die letzte der nachlaufenden Elektroden mit Vorteil einen Durchmesser auf, der um mindestens 0,1 mm, vorzugsweise um mindestens 0,2 mm unter dem Durchmesser der vorlaufenden Elektrode liegt. Es hat sich gezeigt, dass dieser Unterschied in den Durchmessern mindestens notwendig ist, damit sich die Vorteile der Erfindung einstellen.

Vorteilhafterweise werden die Elektroden in Schweißrichtung hintereinander angestellt. Zur besseren Spaltüberbrückbarkeit oder bei Überlappstößen kann es jedoch auch von Vorteil sein, die Elektroden gegenüber der Schweißrichtung zu drehen. Meist empfiehlt sich dann dazu ein Winkel von 10 bis 30° gegenüber der Schweißrichtung.

Für das erfindungsgemäße Verfahren wird mit besonderem Vorteil als Schutzgas Argon, Helium, Kohlendioxid, Sauerstoff oder eine Mischung aus zwei oder mehr dieser Komponenten verwendet. Mit einem Schutzgas aus diesen Komponenten zeigen sich die Vorteile der Erfindung besonders gut.

Vorteilhafterweise sind dabei im Schutzgas 3 bis 40 Vol.-%, vorzugsweise 5 bis 25 Vol.-%, besonders bevorzugt 8 bis 20 Vol.-% Kohlendioxid enthalten. Kohlendioxid im Schutzgas verhindert eine Porenbildung und begünstigt auch ein Ausgasen nach dem Schweißprozess. Weiterhin sorgt das Kohlendioxid für einen guten Wärmeeintrag in das Werkstück hinein. Aufgrund des tiefen Einbrands, welcher mit dem erfindungsgemäßen Verfahren erreicht wird, ist ein guter Wärmeeintrag und eine Porenvermeidung über den gesamten Bereich der Eindringtiefe notwendig, um qualitativ hochwertige Verbindungen zu erlangen. Ein höherer Kohlendioxidanteil als angegeben wirkt sich jedoch auf die Oberflächenbeschaffenheit der Schweißnaht nachteilig aus, da mit zunehmendem Kohlendioxidanteil störende Oxidationsprozesse an der Oberfläche an Bedeutung gewinnen.

Mit Vorteil sind im Schutzgas 5 bis 60 Vol.-%, vorzugsweise 10 bis 50 Vol.-%, besonders bevorzugt 20 bis 35 Vol.-% Helium enthalten. Der Heliumanteil verbessert aufgrund der hohen Wärmeleitfähigkeit des Heliums den Wärmeeintrag des Schutzgases in das Werkstück und verbessert dadurch die Festigkeit und Belastbarkeit der gesamten Schweißnaht. Ein zu hoher Heliumanteil führt jedoch zu Lichtbogeninstabilitäten, welche sich auf die Qualität des Schweißprozesses nachteilig auswirken.

Vorteilhafterweise sind im Schutzgas 1 bis 15 Vol.-%, vorzugsweise 3 bis 10 Vol.-% und besonders bevorzugt 3 bis 5 Vol.% Sauerstoff enthalten. Sauerstoff im Schutzgas wirkt ähnlich wie Kohlendioxid, kann jedoch aufgrund seiner stärkeren oxidierenden Wirkung nur in niedrigeren Anteilen als Kohlendioxid zugegeben werden.

Es eignen sich für das erfindungsgemäße Verfahren neben den Reingasen insbesondere Zwei-Komponenten-Mischungen aus Kohlendioxid und Argon, Sauerstoff und Argon oder aus Helium und Argon sowie Drei-Komponenten-Mischungen aus Kohlendioxid oder Sauerstoff mit Helium und Argon. Auch die Vier-Komponenten-Mischung aus Kohlendioxid, Sauerstoff, Helium und Argon kann zum Einsatz kommen. Die Volumenanteile der Mischungen sind dabei vorteilhafterweise wie weiter oben angegeben zu wählen. Die Festlegung der Mischung und des Mischungsverhältnisses erfolgt in Hinblick auf die vorliegende Schweißaufgabe und richtet sich dabei besonders an den zu verschweißenden Werk- und Zusatzstoffen aus.

In einer vorteilhaften Weiterbildung der Erfindung wird mit Gasschleppe gearbeitet. Die Verwendung einer Gasschleppe bedeutet, dass zusätzlich zu dem die Lichtbögen umgebenden, auf das Schweißbad gerichteten Schutzgas ein weiterer Schutzgasstrom verwendet wird. Dieser weitere Schutzgasstrom wird mit vergleichsweise schwachem Volumenstrom gegen das Werkstück gerichtet und bedeckt die frische Schweißnaht. Die frische Schweißnaht zeichnet sich dadurch aus, dass das Schweißbad bereits erstarrt aber noch nicht ausgekühlt ist. Durch die Verwendung einer Gasschleppe wird somit gewährleistet, dass auch bei der Abkühlung die Schweißnaht noch unter Schutzgas steht. Da mit dem erfindungsgemäßen Verfahren zur Füllung der großen Schweißvolumina sehr viel Material von den Elektroden abgeschmolzen und in die Schweißnaht eingebracht wird und deshalb die Abkühlung der Schweißnaht verhältnismäßig lange dauert, ist in vielen Fällen die Verwendung einer Gasschleppe von Vorteil.

In einer vorteilhaften Ausgestaltung der Erfindung wird die vorlaufende Elektrode im Modus des Sprühlichtbogens und die letzte der nachlaufenden Elektroden mit Impulstechnik betrieben.

In einer anderen vorteilhaften Ausgestaltung werden vor- und nachlaufende Elektroden mit Impulstechnik betrieben.

Dabei werden vorteilhafterweise mit der Impulstechnik entweder synchron und phasenverschobene Pulse oder asynchrone Pulse bereit gestellt. Möglich sind jedoch auch Pulse, die synchron und phasengleich sind.

Das erfindungsgemäße Verfahren eignet sich mit Vorteil für Stähle, besonders für Stähle hoher Wandstärken. So zeigt es insbesondere seine Vorteile beim Schweißen von Stahlbehältern und dabei insbesondere bei der Fertigung von Rundnähten. Diese Schweißaufgabe stellt Anforderungen, die erst von dem erfindungsgemäßen Verfahren zufriedenstellend gelöst werden können. Aber auch für Kehl- und Stumpfnähte ist das erfindungsgemäße Verfahren gut geeignet. Kehl- und Stumpfnähte zur Verfügung von Stählen mit hohen Wandstärken sind im Schiffsbau häufig notwendig, so dass das erfindungsgemäße Verfahren seine Vorteile auch im Schiffsbau zeigt. Mit dem erfindungsgemäßen Verfahren ist es somit möglich, auch hohe Wandstärken mit hoher Geschwindigkeit zu fügen, wobei stets Schweißnähte entstehen, die auf ein gemeinsames Schweißbad zurückzuführen sind. Insbesondere eignet sich das Verfahren zum Fügen dicker Bleche im Bereich von 3 bis 5 mm.

So zeigen sich die Vorteile besonders beim Schweißen von Gasflaschen für komprimierte oder verflüssigte Gase (z.B. Propan- oder Butangasflaschen).

Im Folgenden soll die Erfindung anhand von Figur 1 in einer beispielhaften Ausgestaltung näher erläutert werden. Anhand von Figur 2 wird die Vorgehensweise zur Bestimmung des Abstands zwischen den Elektroden erläutert. Figur 3 zeigt einen Schliff einer mit Hilfe des erfindungsgemäßen Verfahrens hergestellten Schweißnaht.

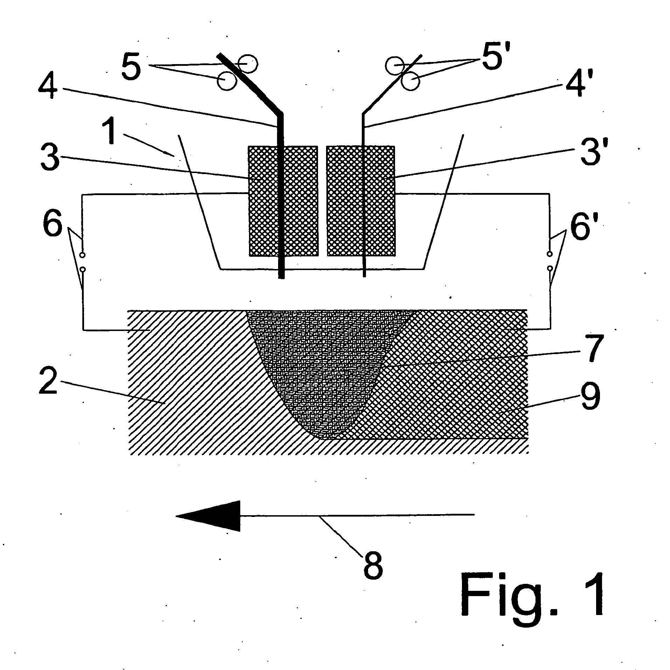

Figur 1 zeigt schematisch eine Schutzgasdüse 1 zum Schweißen eines Werkstücks 2, welche zwei Kontaktrohre 3 und 3', zwei Elektroden 4 und 4' mit zwei Drahtvorschubvorrichtungen 5 und 5' umfasst. Ferner sind Anschlüsse zur Bereitstellung der Potentiale 6 und 6' sowie ein gemeinsames Schweißbad 7 gezeigt. Die Schweißrichtung ist mit dem Pfeil 8 markiert und das nach dem Schweißvorgang zur Schweißnaht erstarrte Schweißbad mit 9.

Auf das Werkstück 2 ist die Schutzgasdüse 1 gerichtet, in welcher sich die beiden abschmelzenden Elektroden 4 und 4' befinden. Zwischen der Elektrode 4 und dem Werkstück 2 sowie zwischen der Elektrode 4' und dem Werkstück 2 brennen zwei voneinander unabhängige Lichtbögen, die von einer gemeinsamen Schutzgasabdeckung, die über die Schutzgasdüse 1 zugeführt wird, umgeben sind. Die beiden Elektroden bilden im Werkstück 2 ein gemeinsames Schweißbad 7. Die beiden voneinander unabhängigen Elektroden 4, 4' werden durch zwei separate Kontaktrohre 3 und 3' geführt, welche an zwei unterschiedliche Stromquellen angeschlossen sind, wodurch sich für die Elektroden zwei unterschiedliche Potentiale 6 und 6' ergeben. Ferner verfügen die beiden Elektroden 4 und 4' über zwei voneinander unabhängigen Drahtvorschubvorrichtungen 5 und 5'. Erfindungsgemäß weist nun die vorlaufende Elektrode 4 eine größeren Durchmesser auf als die nachlaufende Elektrode 4'. Die beiden Elektroden 4 und 4' sind in Schweißrichtung hintereinander angestellt. Als Elektroden werden beispielsweise Drahtelektroden mit einem Durchmesser von 1,6 und 1,2 mm verwendet. Für die Drahtvorschubgeschwindigkeit werden dabei vorteilhafterweise Werte zwischen 5 und 20 m/min eingestellt. Der Schweißstrom wird auf Werte zwischen 80 und 500 A, vorzugsweise zwischen 100 und 400 A, die Schweißspannung auf Werte zwischen 15 und 50 V, vorzugsweise zwischen 20 und 40 V eingestellt. Für den Fall, dass ein Impulslichtbogen verwendet wird, gelten diese Werte als Mittelwerte. Oft kann es von Vorteil sein, die beiden Elektroden 4 und 4' im Master-Slave-Betrieb einzusetzen, wobei die vorlaufende Elektrode 4 der führende Master ist. Die Schweißgeschwindigkeit liegt bei dieser Parameterwahl im Bereich von 50 bis 300 cm/min. Als Schutzgasmischung eignet sich insbesondere eine Mischung aus 8 bis 25 Vol.-% Kohlendioxid und Argon im verbleibenden Volumenanteil, und besonders bevorzugt eine Mischung aus 8 bis 25 Vol.-% Kohlendioxid, 10 bis 40 Vol.-% Helium und Argon im verbleibenden Volumenanteil. Neben den Zwei- und Drei-Komponenten-Mischungen aus Kohlendioxid, Argon und gegebenenfalls Helium, die mit den genannten Volumenanteilen besonders bevorzugt werden, eignen sich weiterhin mit Vorteil auch die Drei-Komponenten Mischungen aus Sauerstoff, Helium und Argon und hier wiederum die Mischung aus 3 bis 5 Vol.-% Sauerstoff, 20 bis 30 Vol.-% Helium und restlich Argon. Zum Einsatz kommen jedoch beispielsweise auch die Zwei-Komponenten-Mischungen aus Kohlendioxid oder Sauerstoff und Argon, die Drei-Komponenten-Mischung aus Kohlendioxid, Sauerstoff und Argon sowie auch die Vier-Komponenten-Mischung aus Kohlendioxid, Sauerstoff, Helium und Argon. Die Schutzgasmischungen unterstützen dabei das erfindungsgemäße Verfahren und führen dazu, dass sich die Vorteile der Erfindung in besonderer Weise zeigen.

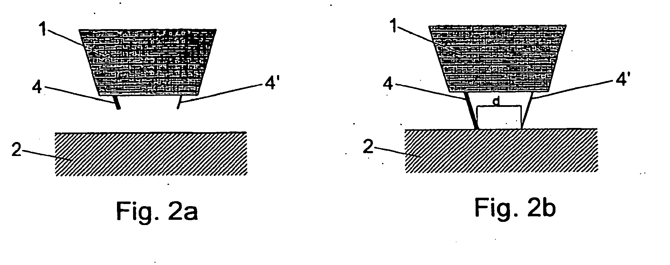

Anhand von Figur 2a und b wird im folgenden die Vorgehensweise zur Bestimmung des Abstands zwischen den Elektroden erläutert. Die Bezugszeichen von Figur 1 und 2 stimmen überein. Die Schutzgasdüse 1 mit den Elektroden 4 und 4' wird über dem Werkstück 2 in der für den Schweißprozess benötigten Höhe angebracht (siehe Fig. 2a). Anschließend werden die Elektroden 4 und 4' durch Betätigung des Drahtvorschubs solange aus der Schutzgasdüse geschoben, bis die Elektrodenenden das Werkstück 2 berühren (siehe Fig. 2b). Der Strecke zwischen den beiden Punkten, an denen die Elektrodenenden das Werkstück berühren, ist der Abstand d. Nun werden die Elektroden, wiederum durch Betätigung des Drahtvorschubs bei fixer Schutzgasdüse 1, in ihre ursprüngliche Stellung zurückgebracht. Sodann wird mit dem Schweißen begonnen. Eingestellt werden kann der Abstand durch Verrücken der Elektroden oder, falls die Elektroden, wie in Fig. 2 gezeigt, zueinander einen Winkel einschließen, durch Veränderung des Winkels. Bei paralleler Elektrodenführung, wie sie in Fig. 1 gezeigt ist, ist der Abstand d an allen Stellen gleich und kann folglich auch ohne Werkstückberührung an der Schutzgasdüse gemessen werden. Für den Abstand d werden in vorteilhaften Ausgestaltungen der Erfindung 3 bis 7 mm eingestellt.

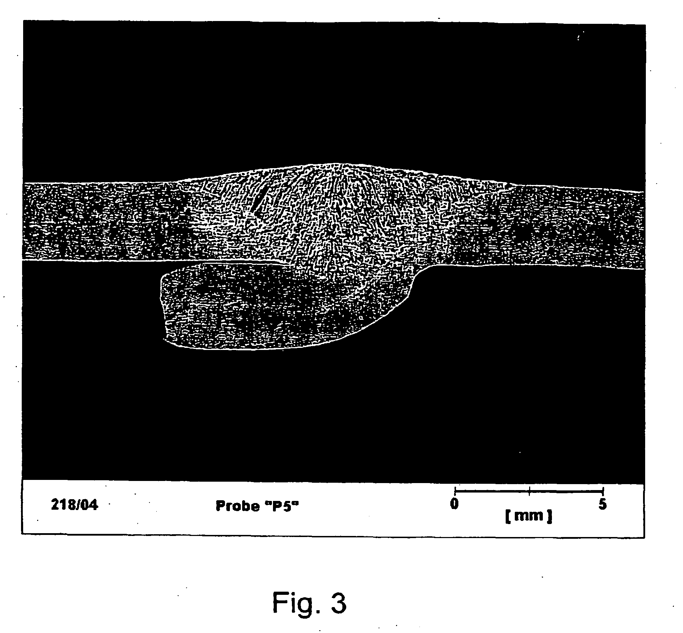

Figur 3 zeigt den Schliff einer mit Hilfe des erfindungsgemäßen Verfahrens hergestellten Schweißnaht. Deutlich zu sehen sind die beiden Bleche, die zum Schweißen übereinander geschoben wurden und nun einen Falz aufweisen. Dem Schliff ist nicht anzusehen, dass die Schweißnaht mittels des erfindungsgemäßen Verfahrens erzeugt wurde, da der Schliff nicht von einem Schliff zu unterscheiden ist, der sich bei einer Schweißnaht zeigt, die von einer einzelnen Elektrode erzeugt wurde. Lediglich der tiefe Einbrand bei der hohen Blechdicke zeigen, dass es sich nicht eine herkömmliche Schweißnaht handeln kann. Der Schliff zeigt somit deutlich, dass bei dem erfindungsgemäßen Verfahren ein Schweißprozess mit nur einem Schweißbad vorliegt.

## Patentansprüche

1. Verfahren zum Schweißen mit mindestens zwei abschmelzenden Elektroden (4, 4'), die Sich in einer Schutzgasdüse (1) befinden, an welchen mindestens zwei unterschiedliche Potentiale (6, 6') angelegt werden, wobei ein gemeinsames Schweißbad (7) von einer vorlaufenden Elektrode (4) und von mindestens einer nachlaufenden Elektrode (4') gebildet wird, und wobei für die vorlaufende Elektrode (4) ein im Vergleich zu der nachlaufenden Elektrode (4') größerer Elektrodendurchmesser verwendet wird, **dadurch gekennzeichnet, dass** zwei Elektroden mit einen Abstand (d) zueinander von 3 bis 7 mm verwendet werden, wobei der Abstand (d) der Elektroden (4, 4') vor dem Schweißprozess nach Einstellung der Lage der Schutzgasdüse (1) über den Werkstück (2) in der für dem Schweißprozess benötigten Höhe durch Herausfahren der Elektroden (4, 4') bis auf das Werkstück (2) an den das Werkstück berührenden Elektrodenenden gemessen wird.

2. Verfahren nach Anspruch 1, **dadurch gekennzeichnet, dass** für vor- und nachlaufende Elektrode(n) verschiedene Drahtvorschubgeschwindigkeiten verwendet werden.

3. Verfahren nach Anspruch 1 oder 2, **dadurch gekennzeichnet, dass** zwei Elektroden mit einen Abstand (d) zueinander von 4 bis 7 mm, bevorzugt von 5 bis 7 mm verwendet werden.

4. Verfahren nach einem der Ansprüche 1 bis 3, **dadurch gekennzeichnet, dass** die vorlaufende Elektrode (4) einen Durchmesser aufweist, der zwischen 1,0 und 2,0 mm, vorzugsweise zwischen 1,2 und 1,6 mm liegt.

5. Verfahren nach einem der Ansprüche 1 bis 4, **dadurch gekennzeichnet, dass** die letzte der nachlaufenden Elektroden (4') einen Durchmesser aufweist, der um mindestens 0,1 mm, vorzugsweise um mindestens 0,2 mm unter dem Durchmesser der vorlaufenden Elektrode (4) liegt.

6. Verfahren nach einem der Ansprüche 1 bis 5, **dadurch gekennzeichnet, dass** die Elektroden in Schweißrichtung (8) hintereinander angestellt werden.

7. Verfahren nach einem der Ansprüche 1 bis 6, **dadurch gekennzeichnet, dass** als Schutzgas Argon, Helium, Kohlendioxid, Sauerstoff oder eine Mischung aus zwei oder mehr dieser Komponenten verwendet wird.

8. Verfahren nach Anspruch 7, **dadurch gekennzeichnet, dass** im Schutzgas 3 bis 40 Vol.-%, vorzugsweise 5 bis 25 Vol.-%, besonders bevorzugt 8 bis 20 Vol.-% Kohlendioxid enthalten sind.

9. Verfahren nach Anspruch 7 oder 8, **dadurch gekennzeichnet, dass** im Schutzgas 5 bis 60 Vol.-%, vorzugsweise 10 bis 50 Vol.-%, besonders bevorzugt 20 bis 35 Vol.-% Helium enthalten sind.

10. Verfahren nach einem der Ansprüche 7 bis 9, **dadurch gekennzeichnet, dass** 1 bis 15 Vol.-%, vorzugsweise 3 bis 10 Vol.-% und besonders bevorzugt 3 bis 5 Vol.-% Sauerstoff enthalten sind.

11. Verfahren nach einem der Ansprüche 1 bis 10, **dadurch gekennzeichnet, dass** mit Gasschleppe gearbeitet wird.

12. Verfahren nach einem der Ansprüche 1 bis 11, **dadurch gekennzeichnet, dass** die vorlaufende Elektrode (4) im Modus des Sprühlichtbogens und die letzte der nachlaufenden Elektroden (4') mit Impulstechnik betrieben wird.

13. Verfahren nach einem der Ansprüche 1 bis 11, **dadurch gekennzeichnet, dass** vor-und nachlaufende Elektroden (4, 4') mit Impulstechnik betrieben werden.

14. Verfahren nach Anspruch 13, **dadurch gekennzeichnet, dass** mit der Impulstechnik synchron und phasenverschobene Pulse oder asynchrone Pulse bereitgestellt werden.

15. Verfahren nach einem der Ansprüche 1 bis 14, **dadurch gekennzeichnet, dass** Rundnähte an Stahlbehältern geschweißt werden.

16. Verfahren nach Anspruch 15, **dadurch gekennzeichnet, dass** Gasflaschen geschweißt werden.

## Claims

1. Welding method using at least two melting electrodes (4, 4'), which are located in a shielding gas nozzle (1) and to which at least two different potentials (6, 6') are applied, a common welding bath (7) being formed by a leading electrode (4) and at least one trailing electrode (4'), and a greater electrode diameter being used for the leading electrode (4) in comparison with the trailing electrode (4'), **characterized in that** two electrodes with a distance (d) from each other of from 3 to 7 mm are used, the distance (d) between the electrodes (4, 4') before the welding process being measured after setting the position of the shielding gas nozzle (1) over the workpiece (2) at the height which is required for the welding process by moving out the electrodes (4, 4') as far as the workpiece (2) at the ends of the electrodes that are in contact with the workpiece.

2. Method according to Claim 1, **characterized in that** different wire feeding rates are used for leading and trailing electrode(s).

3. Method according to Claim 1 or 2, **characterized in that** two electrodes with a distance (d) from each other of from 4 to 7 mm, with preference from 5 to 7 mm, are used.

4. Method according to one of Claims 1 to 3, **characterized in that** the leading electrode (4) has a diameter which is between 1.0 and 2.0 mm, preferably between 1.2 and 1.6 mm.

5. Method according to one of Claims 1 to 4, **characterized in that** the last of the trailing electrodes (4') has a diameter which is at least 0.1 mm, preferably at least 0.2 mm, below the diameter of the leading electrode (4).

6. Method according to one of Claims 1 to 5, **characterized in that** the electrodes are set one behind the other in the welding direction (8).

7. Method according to one of Claims 1 to 6, **characterized in that** argon, helium, carbon dioxide, oxygen or a mixture of two or more of these components is used as the shielding gas.

8. Method according to Claim 7, **characterized in that** 3 to 40% by volume, preferably 5 to 25% by volume, with particular preference 8 to 20% by volume, of carbon dioxide is contained in the shielding gas.

9. Method according to Claim 7 or 8, **characterized in that** 5 to 60% by volume, preferably 10 to 50 % by volume, with particular preference 20 to 35% by volume, of helium is contained in the shielding gas.

10. Method according to one of Claims 7 to 9, **characterized in that** 1 to 15% by volume, preferably 3 to 10% by volume and with particular preference 3 to 5% by volume, of oxygen is contained.

11. Method according to one of Claims 1 to 10, **characterized in that** work is carried out with a gas trail.

12. Method according to one of Claims 1 to 11, **characterized in that** the leading electrode (4) is operated in the spray-arc mode and the last of the trailing electrodes (4') is operated by the pulse technique.

13. Method according to one of Claims 1 to 11, **characterized in that** leading and trailing electrodes (4, 4') are operated by the pulse technique.

14. Method according to Claim 13, **characterized in that**, with the pulse technique, synchronous and phase-shifted pulses or asynchronous pulses are provided.

15. Method according to one of Claims 1 to 14, **characterized in that** circumferential welds are welded on steel containers.

16. Method according to Claim 15, **characterized in that** gas cylinders are welded.

## Revendications

1. Procédé de soudage à l'aide d'au moins deux électrodes fusibles (4, 4') qui sont situées dans une tuyère (1) de gaz de protection sur lesquelles on applique au moins deux potentiels différents (6, 6'), un bain commun de soudage (7) étant formé par une électrode avant (4) et au moins une électrode arrière (4'), l'électrode avant (4) ayant un diamètre plus grand que celui de l'électrode arrière (4'), **caractérisé en ce que** l'on utilise deux électrodes écartées l'une de l'autre d'une distance (d) de 3 à 7 mm, la distance (d) entre les électrodes (4, 4') avant l'opération de soudage étant mesurée sur les extrémités d'électrode en contact avec la pièce après ajustement de la position de la tuyère (1) de gaz de protection au-dessus la pièce (2) à la hauteur nécessaire pour l'opération de soudage, en sortant les électrodes (4, 4') jusqu'à ce qu'elles aboutissent sur la pièce (2).

2. Procédé selon la revendication 1, **caractérisé en ce que** l'on utilise des vitesses différentes d'avancement de fil pour l'électrode avant et la ou les électrodes arrière.

3. Procédé selon les revendications 1 ou 2, **caractérisé en ce que** l'on utilise deux électrodes séparées par une distance (d) de 4 à 7 mm et de préférence de 5 à 7 mm.

4. Procédé selon l'une des revendications 1 à 3, **caractérisé en ce que** le diamètre de l'électrode avant (4) est situé entre 1,0 et 2,0 mm et de préférence entre 1,2 et 1,6 mm.

5. Procédé selon l'une des revendications 1 à 4, **caractérisé en ce que** la dernière des électrodes (4') a un diamètre inférieur d'au moins 0,1 mm et de préférence d'au moins 0,2 mm au diamètre de l'électrode avant (4).

6. Procédé selon l'une des revendications 1 à 5, **caractérisé en ce que** les électrodes sont placées l'une derrière l'autre dans la direction de soudage (8).

7. Procédé selon l'une des revendications 1 à 6, **caractérisé en ce que**, comme gaz de protection, on utilise l'argon, l'hélium, le dioxyde de carbone, l'oxygène ou un mélange de deux de ces composants ou plus.

8. Procédé selon la revendication 7, **caractérisé en ce que** le gaz de protection contient de 3 à 40 % en volume, de préférence de 5 à 25 % en volume et de façon particulièrement préférable de 8 à 20 % en volume de dioxyde de carbone.

9. Procédé selon les revendications 7 ou 8, **caractérisé en ce que** le gaz de protection contient de 5 à 60 % en volume, de préférence de 10 à 50 % en volume et de façon particulièrement préférable de 20 à 35 % en volume d'hélium.

10. Procédé selon l'une des revendications 7 à 9, **caractérisé en ce que** de 1 à 15 % en volume, de préférence de 3 à 10 % en volume et de façon particulièrement préférable de 3 à 5 % en volume d'oxygène sont contenus.

11. Procédé selon l'une des revendications 1 à 10, **caractérisé en ce que** l'on travaille avec une traînée de gaz.

12. Procédé selon l'une des revendications 1 à 11, **caractérisé en ce que** l'électrode avant (4) travaille en mode à arc lumineux projeté et la dernière des électrodes arrière (4') en technique pulsée.

13. Procédé selon l'une des revendications 1 à 11, **caractérisé en ce que** l'électrode avant et les électrodes arrière (4, 4') sont utilisées en technique pulsée.

14. Procédé selon la revendication 13, **caractérisé en ce que** dans la technique pulsée, on délivre des impulsions synchronisées et déphasées ou des impulsions non synchronisées.

15. Procédé selon l'une des revendications 1 à 14, **caractérisé en ce que** l'on soude des cordons ronds sur des récipients en acier.

16. Procédé selon la revendication 15, **caractérisé en ce que** l'on soude des bouteilles à gaz.
